(19) Europäisches Patentamt
European Patent Office
Office européen des brevets

(11) **EP 4 585 579 A1**

(12) **EUROPEAN PATENT APPLICATION**

(43) Date of publication:
**16.07.2025 Bulletin 2025/29**

(21) Application number: **24151036.1**

(22) Date of filing: **09.01.2024**

(51) International Patent Classification (IPC):
**C04B 28/02** (2006.01)   **C04B 28/16** (2006.01)
**C04B 40/02** (2006.01)

(52) Cooperative Patent Classification (CPC):
(C-Sets available)
**C04B 40/0231; C04B 28/025; C04B 28/16**   (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Heidelberg Materials AG**
**69120 Heidelberg (DE)**

(72) Inventors:
• **ZAJAC, Maciej**
**69120 Heidelberg (DE)**
• **DIETERMANN, Martina**
**69120 Heidelberg (DE)**
• **SKOCEK, Jan**
**69120 Heidelberg (DE)**
• **PATO, Nicolas**
**69120 Heidelberg (DE)**

(74) Representative: **Zellentin & Partner mbB**
**Patentanwälte**
**Rubensstraße 30**
**67061 Ludwigshafen (DE)**

(54) **HYDRATION RETARDERS AS CARBONATION ACCELERATORS**

(57)    Use of at least two hydration retarders from the group comprising sugar, phosphate, polycarboxylic acid and/or salt, hydroxycarboxylic acid and/or salt, and lignosulfonate as accelerator for the carbonation hardening of building materials comprising a calcium silicate material as binder, method of accelerating, and binder comprising the accelerator and calcium silicate material.

(52) Cooperative Patent Classification (CPC): (Cont.)

C-Sets
**C04B 28/025, C04B 2103/24, C04B 2103/24,
C04B 40/0231;
C04B 28/16, C04B 7/3453, C04B 22/0013,
C04B 24/06, C04B 22/16, C04B 24/10,
C04B 24/18, C04B 24/2641, C04B 40/0231**

**Description**

The present invention relates to a use of at least two hydration retarders as accelerator for the carbonation hardening of calcium silicates, a method of accelerating the carbonation hardening using the accelerator, as well as to carbonation hardening binders comprising calcium silicate and the accelerator.

The recent development in the cement and concrete industry is determined by sustainability considerations. These are mostly focused on the urgent need to decarbonize the cement industry. The most relevant large-scale $CO_2$ abatement measure is the post-production carbon capture and storage (CCS) or carbon capture and utilization (CCU). Carbon capture technologies such as amine-based $CO_2$ scrubber, membrane-based gas separation, oxyfuel kiln lines or indirect calcination of the calcium carbonate are needed for the CCS to work efficiently. Although the storage of $CO_2$ has several social and technical constraints, it still is a promising short-term solution for the cement industry. Nonetheless, the pursuit of alternative solutions is ongoing, and a particular focus is on CCU solutions. The $CO_2$ captured from the cement industry can be used, e.g., for the food industry or during the oil recovery. However, the volume of the $CO_2$ gases currently used for these applications is significantly lower compared to the volume of the $CO_2$ emitted during the cement production. Consequently, alternative solutions are needed.

A promising approach is to substitute the traditional hydration of a hydraulic cement by carbonation hardening of a binder containing cement clinker and/or other calcium silicates for making building materials like concrete. $CO_2$ curing of fresh concrete is a solution that enables direct carbon sequestration within the construction industry. It improves early mechanical performance when compared to traditional hydration curing. An additional advantage of carbonation hardening is that it allows using non-hydraulic calcium silicates and other carbonatable materials as binder in building materials like concrete. Carbonation also activates hardening of hydraulic binders and accelerates the evolution of mechanical performance.

Many binders hardening by carbonation have been proposed, e.g., in US 2011/0165400 A1, US 2012/0082839 A1, US 2012/0312194 A1, and WO 2016/022485 A1. Further, the mechanism of calcium silicate carbonation has been studied, see e.g., M. Zajac et al., "CO2 mineralization of Portland cement: towards understanding the mechanisms of enforced carbonation", J. CO2 Utilization 38 (2020) 398-415. The main components of carbonation hardening binders are usually $C_2S$, $C_2S_3$, and CS (belite, rankinite, and wollastonite, respectively). Generally, these materials do not contain reactive calcium aluminate phases. Consequently, the calcium silicates alone may be used as a binder. The proposals for using carbonation hardening binders provide progress but there is an ongoing need for improved methods and products, procedural problems are not really solved. For example, the known binders and methods require a substantial $CO_2$ concentration and/or thin parts to provide appreciable hardening within adequate time.

A carbonation of recycled concrete waste to achieve both sequestering of carbon dioxide and providing a reactive supplementary cementitious material (abbreviated SCM) from such waste is another promising approach, described for example in EP 3 498 681 A1, EP 3 581 257 A1, WO 2019/072497 A1, and WO 2019/072640 A1. These also mention that a variety of substances can be added to the starting material for carbonation, inter alia substances that accelerate the carbonation process and/or improve the final properties of the carbonated waste material as well as activators that promote hydraulic reactivity of the cement phases and/or carbonation activity of the hydrates and anhydrous phases, respectively. The lists of substances mentioned comprise: alkanolamines; halogenides; EDTA; enzymes such as carbonic anhydrase; water reducing agents, plasticizers and super plasticizers like organic compounds with one or more from carboxylate, sulfonate, phosphonate, phosphate or alcohol functional groups; retarders like phosphates, borates, salts of Pb, Zn, Cu, As, Sb, lignosulfonates, hydroxyl-carboxylic acid and their salts, phosphonates, sugars (saccharides); alkali and alkaline earth metal hydroxides, nitrates, sulfates, chlorides, silicates, (hydro-)carbonates or organic compounds such as glycerin, organic acids and their salts, cyanates and amines. A possible influence of dosage on effect is also mentioned. From these general remarks a solution of the problems mentioned above for carbonation hardening binders is not apparent. Carbonated recycled concrete waste is most often used as SCM so Portland cement is still needed, and the carbon dioxide emissions are not substantially reduced.

Surprisingly, it was now found that the performance of belitic clinkers, based on industrial materials, in carbonation hardening is improved when specific known hydration retarders are added to the binder or concrete in a specific amount. The typical strong retarders for hydraulic cements and concrete, which delay the evolution of mechanical performance by delaying the reaction of cement with water during hydration, act as accelerators for the evolution of mechanical performance during carbonation hardening. The retarders which usually retard EARLY mechanical strength development with the hydraulic cements act as accelerators for the evolution of EARLY mechanical performance applying carbonation hardening.

Thus, the above-mentioned problem is solved by a use of at least two hydration retarders from the group comprising sugar, phosphate, polycarboxylic acid and/or salt, hydroxycarboxylic acid and/or salt, and lignosulfonate as accelerator for the carbonation hardening of building materials comprising a calcium silicate material as binder with a dosage of the accelerator from 5 to 25 wherein the dosage is calculated as

$$\text{dosage} = \text{d\_sugar}/0.00138 - \text{d\_phosphate}/0.00382 + \text{d\_polycarboxylic}$$
$$\text{acid}/0.00674 + \text{d\_hydroxycarboxylic acid}/0.00694 + \text{d\_lignosulfonate}/0.0147$$

with

d_sugar = amount sugar in wt.-%, d_phosphate = amount phosphate in wt.-%, d_polycarboxylic acid = amount polycarboxylic acid and polycarboxylic acid salt in wt.-%, d_hydroxycarboxylic acid = amount hydroxycarboxylic acid and hydroxycarboxylic acid salt in wt.-%, d_lignosulfonate = amount lignosulfonate in wt.-%

all with respect to the weight of calcium silicates in the binder. The problem is further solved by a method of accelerating the carbonation hardening of building materials comprising a calcium silicate material as binder wherein at least two hydration retarders from the group comprising sugar, phosphate, polycarboxylic acid and/or salt, hydroxycarboxylic acid and/or salt, and lignosulfonate are added as accelerator with a dosage of the accelerator from 5 to 25 wherein the dosage is calculated as

$$\text{dosage} = \text{d\_sugar}/0.00138 - \text{d\_phosphate}/0.00382 + \text{d\_polycarboxylic}$$
$$\text{acid}/0.00674 + \text{d\_hydroxycarboxylic acid}/0.00694 + \text{d\_lignosulfonate}/0.0147$$

with
d_sugar = amount sugar in wt.-%, d_phosphate = amount phosphate in wt.-%, d_polycarboxylic acid = amount polycarboxylic acid and polycarboxylic acid salt in wt.-%, d_hydroxycarboxylic acid = amount hydroxycarboxylic acid and hydroxycarboxylic acid salt in wt.-%, d_lignosulfonate = amount lignosulfonate in wt.-%
all with respect to the weight of calcium silicates in the binder. The problem is still further solved by carbonation hardening binders comprising a calcium silicate material and at least two hydration retarders from the group comprising sugar, phosphate, polycarboxylic acid and/or salt, hydroxycarboxylic acid and/or salt, and lignosulfonate as accelerator with a dosage of the accelerator from 5 to 25 wherein the dosage is calculated as

$$\text{dosage} = \text{d\_sugar}/0.00138 - \text{d\_phosphate}/0.00382 + \text{d\_polycarboxylic}$$
$$\text{acid}/0.00674 + \text{d\_hydroxycarboxylic acid}/0.00694 + \text{d\_lignosulfonate}/0.0147$$

with
d_sugar = amount sugar in wt.-%, d_phosphate = amount phosphate in wt.-%, d_polycarboxylic acid = amount polycarboxylic acid and polycarboxylic acid salt in wt.-%, d_hydroxycarboxylic acid = amount hydroxycarboxylic acid and hydroxycarboxylic acid salt in wt.-%, d_lignosulfonate = amount lignosulfonate in wt.-%
all with respect to the weight of calcium silicates in the binder.

The use, method and binder according to the invention advantageously allow the manufacturing of building materials that harden by carbonation within adequate times (e.g., within 12 hours to 2 days) and with carbon dioxide concentrations as found in exhaust gas, i.e., from 1 Vol.-% or 2 Vol.-% or 4 Vol.-% to 10 Vol.-% or 20 Vol.-% or 50 Vol.-%. The calcium silicate material does not need a hydraulic reactivity, in one variant it shows no or only a minor hydraulic reactivity at least within a time of 24 hours from mixing with water. The binder typically contains one or more calcium silicates as calcium silicate material that require less energy to produce than Ordinary Portland Cement (abbreviated OPC). Also, the calcium silicate material usually has a lower ratio of calcium to silicon reducing the carbon dioxide emissions generated by calcination of limestone. Additionally, carbon dioxide is bound and thereby fixed in the building element or structure made from a building material comprising the binder until the building element or structure is demolished.

Herein, carbonation designates a reaction with carbon dioxide resulting in compounds that comprise carbonate and/or hydrogen carbonate ions in their structure. Natural carbonation is a carbonation taking place upon contact with air. Usually, natural carbonation does not contribute to the hardening of calcium silicates by carbonation in a significant amount. Due to the very low $CO_2$ content in air the times would not be adequate, i.e., much too long to be useful for building. This is also the case for the binders according to the invention. Although they do not need high carbon dioxide concentrations and harden appreciably with a few percent carbon dioxide, the 0.04 Vol.-% contained in air are too low for practical use as carbonation atmosphere.

Compounds are mostly named by the pure form, without explicit mentioning of solid solutions, foreign ion substitution and impurities etc. as are usual in technical and industrial materials. One of ordinary skill in the art knows that the exact composition of the phases described may vary due to substitution with foreign ions. Such compounds are comprised when mentioning the pure form herein unless it is expressly stated otherwise. To simplify the description the following abbreviations that are usual in the field of cement are used herein: H - $H_2O$, C - CaO, A - $Al_2O_3$, F - $Fe_2O_3$, M - MgO, N - $Na_2O$, K - $K_2O$, S - $SiO_2$ and $ - SOs.

Cement designates a material that, after mixing with an aqueous liquid to form a paste, is able to develop mechanical strength by hydraulic reaction. Thus, cement mostly denotes a clinker, frequently a Portland clinker, ground with or without further components, and also mixtures like super sulphated cement, geopolymer binder, and hydraulic materials not obtained by sintering like a dicalcium silicate obtained by hydrothermal treatment. Composite cement means a mixture containing cement and a supplementary cementitious material and/or filler.

A supplementary cementitious material (SCM) is defined as a pozzolanic and/or latent hydraulic material useful to replace a part of the clinker in a cement. Latent hydraulic materials have a composition that allows hydraulic reaction upon contact with water, wherein typically an activator is needed to enable hydraulic hardening within technically feasible times. Activator means a substance that accelerates the hydraulic hardening of latent hydraulic materials. It can be an addition like sulfate or calcium hydroxide or calcium oxide and/or products of the hydraulic reaction of the ground clinker, e.g., calcium silicates liberate calcium hydroxide during hydraulic hardening. Pozzolanic materials are characterized by a content of reactive silica and/or alumina which form strength providing calcium silicate hydrates and calcium aluminate hydrates, respectively, during hydration of the clinker together with the calcium hydroxides liberated. In practice the limit between latent hydraulic and pozzolanic materials is not well defined, for example, fly ashes can be both latent hydraulic and pozzolanic, depending on their calcium oxide content. Consequently, the term SCM designates both latent hydraulic as well as pozzolanic materials. Not hydraulically reactive or only slightly reactive materials like limestone that substantially do not take part in the hydraulic reactivity are not considered SCM, although such materials and SCM are sometimes summarized as mineral additions.

Binder hardening by carbonation designates a material comprising a substantial amount of carbonatable materials. According to the invention, calcium silicate materials are used, typically calcium silicates like $C_2S$, $C_2S_3$, and CS, and also calcium magnesium silicates like $MC_7S_4$ and $MC_3S_2$. Other carbonatable materials are possible as binder hardening by carbonation, as well as mixtures of different carbonatable materials. Usually, a binder hardening by carbonation comprises at least 50 wt.-% carbonatable materials. Hydraulic phases showing a fast hydraulic reaction, especially $C_3S$, can be present but they are not needed for evolution of mechanical performance. In one embodiment, their amount(s) is(are) low, e.g., the amount is $\leq$ 15 wt.-% or $\leq$ 10 wt.-% or $\leq$ 5 wt.-% for each and preferably for their sum. Thus, a hydraulic reaction after contact with water may take place but usually not before significant carbonation hardening occurs and possibly not at all. In another embodiment, the carbonation hardening binder comprises considerable amounts of hydraulic phases showing a fast hydraulic reaction. For example, a Portland clinker can be used as binder or amounts of $C_3S$ from 15 to 80 wt.-% can be present in the carbonation hardening binder. The composition of Portland clinker varies depending on raw meal composition and conditions applied. Usually, Portland clinker comprises from 45 to 85 wt.-% $C_3S$, from 0.1 to 30 wt.-% $C_2S$, from 4 to 60 wt.-% $C_2(A,F)$, and from 7 to 16 wt.-% CsA, as well as 0.1 to 6 wt.-% CaO and 0.5 to 4.5 wt.-% MgO.

A binder hardening by carbonation can contain further components, such as but not limited to one or more SCM. Herein, latent hydraulic materials and especially pozzolanic SCM can also act as (mainly) not reactive additions. Depending on the specific composition of the binder or building material there may or may not be substances available that activate a hydraulic reaction of latent hydraulic materials, i.e., accelerate the reaction to a speed useful in practice. Pozzolans "only" need calcium ions which are present during carbonation hardening, so a pozzolanic reaction is possible in principle, but it might be too slow to significantly contribute to hardening.

A cement or binder is usually used adding water or another aqueous liquid to form a paste. Mostly, aggregate is also added. Typically, admixtures and/or additives known as such are added to the cement or binder and/or to the paste.

Building material means a moldable mixture, designated paste, that is able to harden by carbonation or by carbonation and hydration and comprises a binder as well as optionally any other addition contained to adjust the properties like final strength, workability of the mixture and strength development properties, to the intended use of the building material. For example, a concrete used to build a bridge needs other properties than a screed for casting a floor or a mortar for laying bricks. A building material is mostly a wet mixture obtained by mixing the binder with water and usually including other components like aggregate. Hydraulically hardening building material designates a wet mixture that comprises a cement and is able to harden by hydration (i.e., reaction with water).

Building element and building structure denote the hardened building material, for example but not limited to a pre-cast concrete element or a floor/ceiling or a bridge part from cast-in-place concrete.

According to the invention, a combination of at least two retarders is used as accelerator for carbonation hardening binders based on a calcium silicate material. The calcium silicate material can be a single calcium silicate phase or a mixture of two or more calcium silicates. The average molar ratio Ca/Si in the binder preferably ranges from 0.5 to 2.5. Preferred calcium silicates are $C_2S$, $C_2S_3$, and CS. Calcium magnesium silicates like $MC_7S_4$ and $MC_3S_2$ are also useful. Other carbonatable materials can be present, for example but not limited to $C_3S$ and CaO, e.g., by using or adding Portland clinker or Portland cement as calcium silicate material. A hydration of Portland cement or Portland clinker is controlled by the addition of calcium sulfate, as in typical Portland cement. The hydration of $C_3A$ and $C_4AF$, typically a fast reaction taking place before and during early phases of carbonation, is beneficial from the carbonation perspective. It transforms minimally carbonatable phases into hydrates that carbonate well. Usually, the binder hardening by carbonation comprises at least 40 wt.-% carbonatable materials, preferably at least 50 wt.-%, most preferred at least 60 wt.-%. The binder can consist of one or more carbonatable materials, especially of one or more of $C_2S$, $C_2S_3$, $CS$, $MC_7S_4$, and $MC_3S_2$ and $C_3S$, Portland clinker and other hydraulic phases can be present. In one embodiment, their amount(s) is(are) $\leq$ 15 wt.-% or $\leq$ 10 wt.-% or $\leq$ 5 wt.-% for each of them, preferably for their sum. In another embodiment, the binder consists of one or more of $C_3S$, $C_2S$, $C_2S_3$, $CS$, $MC_7S_4$, and $MC_3S_2$. In yet another embodiment, the binder contains Portland cement or Portland clinker as a major component, i.e., in an amount of at least 50 wt.-%, or consists of Portland cement or Portland clinker. In the latter case, a sulfate carrier is added in the usual amount of up to 5 wt.-%, often from 2 or 3 to 4 wt.-%. Any known sulfate carrier is suitable, for example but not limited to gypsum, hemihydrate, and anhydrite.

The accelerator comprises at least two retarders from the group comprising sugar, phosphate, polycarboxylic acid and/or salt, hydroxycarboxylic acid and/or salt, and lignosulfonate. Preferred are mixtures of at least two retarders from the group comprising sucrose, pyrophosphate, citric acid and/or citric acid salt, gluconic acid and/or gluconate, and lignosulfonate. More preferred are mixtures of sucrose and pyrophosphate.

The dosage of the accelerator ranges from 5 to 25 wherein the dosage is calculated as

$$\text{dosage} = d\_sugar/0.00138 – d\_phosphate/0.00382 + d\_polycarboxylic$$
$$\text{acid}/0.00674 + d\_hydroxycarboxylic\ acid/0.00694 + d\_lignosulfonate/0.0147$$

with

d_sugar = amount sugar in wt.-%, d_phosphate = amount phosphate in wt.-%, d_polycarboxylic acid = amount polycarboxylic acid and polycarboxylic acid salt in wt.-%, d_hydroxycarboxylic acid = amount hydroxycarboxylic acid and hydroxycarboxylic acid salt in wt.-%, d_lignosulfonate = amount lignosulfonate in wt.-%
all with respect to the weight of calcium silicates in the binder. Thus, the amounts of polycarboxylic acid and polycarboxylic acid salt as well as of hydroxycarboxylic acid and hydroxycarboxylic acid salt are added to provide d_polycarboxylic acid and d_hydroxycarboxylic acid, respectively.

The mentioned dosages typically correspond to amounts ranging from 0.01 to 5.0 wt.-%, preferably from 0.1 to 3.5 wt.-%, and most preferably from 0.5 to 2.5 wt.-%, in relation to the total mass of calcium silicates in the binder.

The retarder mixture constituting the accelerator is usually added in the form of a suspension or solution of the active substances in water. The content of the solid material in the accelerator suspension or solution is typically > 1 wt.-%, preferably > 5 wt.-% and most preferred > 15 wt.-%. Normally, the content of solid material is lower than 75 wt.-%, preferably lower than 60 wt.-% and most preferably lower than 50 wt.-%. The accelerator or one of its components can also be added to the calcium silicate material in dry form.

The binder can also contain sulfate. For example, but not limited to gypsum, hemihydrate, and anhydrite. Binders based on industrial materials or Portland cement clinker contain calcium aluminate phases, such as calcium aluminate ($C_3A$, $C_{12}A_7$ etc.) and/or calcium aluminate ferrite, wherein a sulfate content of up to 20 wt.-%, preferably up to 10 wt.-%, and most preferably up to 7 wt.-%, is beneficial. The minimum amount is dictated by the need to avoid flash setting, as known from Portland cements. Therefore, usually at least 1 wt.-%, often from 2 or 3 wt.-% sulfate are a present. The amount of sulfate is calculated as $SO_3$ with respect to the cement mass. The methods for measuring the amount of sulfate are well-known to one skilled in the art, suitable is for example but not limited to X-ray fluorescence (XRF) analysis.

Manufacturing the binder according to the invention comprises either mixing of the accelerator or at least one of its components with the calcium silicate material in dry form or providing the dry calcium silicate material and the liquid accelerator solution and/or suspension separately in the form of a kit. Methods and devices known in the art for manufacturing cements like CEM I, CEM II, CEM III, CEM IV; and CEM V are suitable and will be adapted as needed using general knowledge in the art.

For making building materials, the binder according to the invention is normally mixed with water. Suitable water-binder mass ratios range from 0.05 to 1.00, preferably from 0.10 to 0.70, most preferred from 0.15 to 0.40. Other liquids containing water are also possible since the binder hardens by carbonation. However, water is usual as liquid, because it is easily available, cheap, and necessitates no measures for protection of workers. Furthermore, the carbonation needs a small amount of water to proceed. The carbonation is a dissolution precipitation process that occurs over the solution at the temperatures and pressures of interest for this invention. The carbonatable phases and $CO_2$ dissolve into the water (solutions) while the products of the carbonation precipitate from the solution. Details are found e.g., in https://doi.org/10.3390/en15103597, M. Zajac et al., "CO2 mineralization methods in cement and concrete industry".

The building material often comprises aggregates, e.g., coarse and fine aggregate in the case of concrete or fine aggregate in the case of mortar. Coarse aggregate usually means sizes of the individual particle from 2 mm or 4 mm or 8 mm up to 64 mm or 32 mm or 16 mm. Coarse aggregate may comprise bigger particles and also finer particles as so-called undersized particles. Fine aggregate typically has maximum particle sizes of 4 mm or 2 mm or 1 mm and may comprise coarser particles as oversized particles. The most common aggregate is sand (fine) and gravel (coarse). Any type of aggregate is useful for a building material comprising the binder (made) according to the present invention, including artificial and recycled aggregate.

It is furthermore possible and common that the building material comprises admixtures and/or additives. Besides the at least two retarders added to the binder as accelerator, known admixtures such as but not limited to water reducing admixtures, superplasticizers, plasticizers, accelerating admixtures, air entrainment admixtures, corrosion inhibitors, shrinkage reducing admixtures, alkali-silica reactivity inhibitors, etc. can be present. Also, known additives like for example but not limited to pigments, colorants, polymers, and fibers (e.g., steel fibers, plastic fibers, glass fibers) can be present. Admixtures and/or additives are usually used in the amounts known per se and/or those recommended by the supplier. Often several admixtures and/or several additives are used. The specific composition is adapted to the intended use of the building material as known per se. Dry substances can also be added to the binder.

The building material is then placed, i.e., cast into a formwork or mold in the usual manner to make the building element or structure. The terms building element and building structure are to be understood broadly herein, denoting any structure obtained by placing a building material. Preferred building elements are precast concrete parts and concrete goods. As with Portland cement the further components of the binder paste besides water like aggregate, additives and admixtures are adapted to the specific use.

The cast building material hardens by carbonation or by carbonation and hydration. To provide sufficient carbon dioxide concentration, the cast material is placed in or contacted with a carbonation atmosphere. The carbonation atmosphere can be provided in gaseous or liquid form.

A gaseous carbonation atmosphere is preferably provided by exhaust gas. The carbon dioxide concentration in the gas is suitably at least 1 Vol.-%, preferably at least 5 Vol.-% and up to 100 Vol.-%. Unpurified $CO_2$ gas can be used. Gases from modified clinker production lines, e.g., oxyfuel kiln lines or indirect calcination of the calcium or magnesium carbonate, or from carbon capture technologies applied or supposed to be applied in the cement industry, such as amine-based $CO_2$ scrubber, membrane-based gas separation, are advantageously used to supply $CO_2$. Pressure is usually ambient pressure, but overpressure of e.g., up to 1 bar or up to 2 bar or up to 5 bar is possible. The temperature can range from ambient, i.e., from 5 or 10 or 20 or 30 °C, to 300 °C or 150 °C or 100 °C or 70 °C, and can also change over time during carbonation hardening. A heating of the carbonating atmosphere is normally not desirable, on the other hand, it is also mostly not necessary to cool an exhaust gas apart from the normal conditioning applied traditionally to the exhaust gas before venting via a stack. In a preferred embodiment, the carbonation takes place at the temperature range from 15 to 60 °C. If needed, the gas providing the carbonation atmosphere is cooled down and/or dried. Green strength is gained as a result of the sample formation by vibro-compaction process. Usually, the building element remains exposed to the carbonating atmosphere until carbonation hardening is completed to the desired degree. There can be very late strength developments for belitic cements > 90 days. In the case of Portland clinker or calcium silicate materials comprising a not negligible amount of $C_3S$, hydraulic hardening occurs before, during and after the exposure to the carbonating atmosphere. Carbonation takes up to 48 hours or 24 hours or 12 hours. Especially pre-cast concrete elements can be removed from the molds once they have sufficient strength. Then, carbonation hardening is completed e.g., in a storage compartment. Hydration also proceeds until the hydraulic phases are hydrated. Compressive strength is not based on this hydration, however.

Carbonation using dissolved carbon dioxide as liquid carbonation atmosphere is possible with building elements that can hold the solution while hardening. Suitable concentrations of $CO_2$ range from 0.1 mM to 10 M (calculated as total concentration of $CO_2$ in solution). Such solutions can be obtained by contacting the liquid with a $CO_2$ rich atmosphere, i.e., a carbon dioxide containing gas. Suitable solutions usually contain from 0.01 to 1 M alkali salts and/or hydroxides and have an initial pH, i.e., before exposing them to the $CO_2$ rich atmosphere, between 8 and 14, accounting for the ionic strength of the solution. The14oluteon is preferably obtained from exhaust gas. The solution can also be used as mixing water or to soak aggregates prior to mixing, thereby providing at least a part of the carbon dioxide from the beginning. It is further possible to add solid carbon dioxide during mixing and/or to the solution used as carbonation atmosphere. The temperature during carbonation in the liquid carbonation atmosphere can range from ambient, i.e., from 5 or 10 or 20 or 30 °C, to 99 °C or 95 °C or 90 °C or 80 °C, and can also change over time during carbonation hardening. A heating is normally not desirable. Also, increased pressure is typically not used, but if desired, pressure can range from ambient up to about 5 bar overpressure, or up to 2 bar overpressure or up to 1 bar overpressure. Hardening usually takes from 1 to 48 hours, often from 3 to 36 hours or from 6 to 24 hours. As with a gaseous carbonation atmosphere, parts can be removed from molds or formwork taken away once sufficient strength has developed. Carbonation can then be continued by placing in or contacting with a gaseous carbonation atmosphere or by placing the parts into another liquid carbonation atmosphere.

The curing through hydration, which happens before, during and after the carbonation curing, is crucial for known hydraulic binders. During this phase, the building material reaches its final performance characteristics. According to the present invention, hydration can add to strength, but carbonation is normally the main hardening process. Hydration can be applied to enhance the performance of the building material through an engineered process, but it is not mandatory. Given the thermodynamically favorable nature of hydration for a hydraulic binder under normal conditions, the process will occur spontaneously, albeit slowly, and in an uncontrolled manner.

An engineered hydration curing process can be conducted in a moist reactor within a temperature range from 1 °C to 70 °C, ideally from 2 °C to 60 °C, and most aptly from 5 °C to 50 °C. The relative humidity (in Vol.-%) should range from 10 % to 99 %, preferably from 30 % to 99 %, and most ideally from 60 % to 99 %. The time frame for this process usually spans from 1 to 90 days, often from 1 to 56 days, and mostly from 5 to 28 days.

Alternatively, the engineered hydration curing process can also be conducted under water. The temperature and time for this procedure are identical to the parameters set for the usual and well-known air-engineered hydration curing.

The building element or structure obtained usually shows compressive strength comparable to that of hydraulically hardened building materials. Thus, the binder according to the invention can replace OPC for building.

The invention will be illustrated further with reference to the examples that follow, without restricting the scope to the specific embodiments described. The invention includes all combinations of described and especially of preferred features that do not exclude each other.

If not otherwise specified, any amount in % or parts is by weight and in the case of doubt referring to the total weight of the composition/mixture concerned. A characterization as "approximately", "around", and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition and is only present in trace amounts or as an impurity. As used herein, unless indicated otherwise, the term "free from" means that a composition does not comprise a particular material, i.e., the composition comprises 0 weight percent of such material.

Example 1

A calcium silicate material with the chemical composition in table 1, determined by XRF analysis as defined in EN 196-2:2013, section 5, was used as calcium silicate:

Table 1

| Phase | amount [wt.-%] |
|---|---|
| $C_2S$ | 68.1 |
| Bredigite | 6.6 |
| Gehlenite | 12.1 |
| Åkermanite | 6.7 |
| $C_2(A,F)$ | 1.4 |
| $C_3A$ | 0.6 |
| Ye'elimite | 0.6 |
| Others | 3.9 |

Earth-dry mortars were mixed in a Hobart mixer according to EN 196-1, with mass ratios w/b = 0.294 and binder/sand = 2.67. Different hydration retarders were added during mixing with water. The mortars were compacted in a proctor device (Marshall-Hammer) to form cylinders. The cylinders were carbonated in a carbonation chamber at 20 °C, 50 % relative humidity (RH) and 50 Vol.-% $CO_2$. After 1 day from mixing with water, the compressive strength was measured according to EN 196-1. The results are listed in table 2. Except for the case of VZ2, the amounts mentioned refer to dry substance and % relates to the total mass of calcium silicates, i.e., $C_2S$, bredigite, gehlenite, and åkermanite.

Table 2

| $C_2S$ Clinker with | Strength [MPa] |
|---|---|
| no admixture | 23.5 |
| 1.0 wt.-% micro anhydrite | 31 |
| 0.30 wt.-% borax | 30 |

(continued)

| C₂S Clinker with | Strength [MPa] |
|---|---|
| 0.125 wt.-% sodium gluconate | 30 |
| 0.25 wt.-% citric acid | 46 |
| 0.02 wt.-% tetra potassium pyrophosphate | 38 |
| 0.04 wt.-% tetra potassium pyrophosphate | 38 |
| 0.02 wt.-% sucrose | 45 |
| 0.04 wt.-% sucrose | 49 |
| 0.25 wt.-% VZ2 | 50 |
| 0.02 wt.-% tetra potassium pyrophosphate + 0.02 wt.-% sucrose | 46 |
| 0.04 wt.-% tetra potassium pyrophosphate + 0.04 wt.-% sucrose | 44 |

The results indicate that the compressive strength is improved with the addition of several known hydration retarders, especially with VZ2 (VZ2 is believed to be a retarder based on sucrose and phosphate, with a concentration of 2.5 to 5 wt.-% phosphate in the solution). The positive impact of the retarder (particularly VZ2) is surprising, since the belitic clinker used as calcium silicate contains only semi-hydraulic or not hydraulic phases that are not expected to improve by adding a retarder for the hydration. The only hydraulically reactive phase in the calcium silicate was CaO, which was present in a limited amount (< 3 %). A control of the reactivity of this phase was expected to be accomplished by the addition of sodium gluconate alone, but sodium gluconate did not work well. Other known retarders also failed to provide sufficient improvement. Further, the effectiveness depended on dosage, adding 0.04 wt.-% of the phosphate-sucrose mixture resulted in less strength after 1 day than adding 0.02 wt.-%. Citric acid alone worked well, but it needed much higher dosage to obtain the effect. This is not desirable, amounts of admixtures should generally be as low as possible.

## Claims

1. Use of at least two hydration retarders from the group comprising sugar, phosphate, polycarboxylic acid and/or salt, hydroxycarboxylic acid and/or salt, and lignosulfonate as accelerator for the carbonation hardening of building materials comprising a calcium silicate material as binder with a dosage of the accelerator from 5 to 25 wherein the dosage is calculated as

$$dosage = d\_sugar/0.00138 - d\_phosphate/0.00382 + d\_polycarboxylic$$
$$acid/0.00674 + d\_hydroxycarboxylic\ acid/0.00694 +$$
$$d\_lignosulfonate/0.0147$$

with

d_sugar = amount sugar in wt.-%, d_phosphate = amount phosphate in wt.-%, d_polycarboxylic acid = amount polycarboxylic acid and polycarboxylic acid salt in wt.-%, d_hydroxycarboxylic acid = amount hydroxycarboxylic acid and hydroxycarboxylic acid salt in wt.-%, d_lignosulfonate = amount lignosulfonate in wt.-%
all with respect to the weight of calcium silicates in the binder.

2. Method of accelerating the carbonation hardening of building materials comprising a calcium silicate material as binder wherein at least two hydration retarders from the group comprising sugar, phosphate, polycarboxylic acid and/or salt, hydroxycarboxylic acid and/or salt, and lignosulfonate are added as accelerator with a dosage of the accelerator from 5 to 25 wherein the dosage is calculated as

$$\text{dosage} = d\_sugar/0.00138 - d\_phosphate/0.00382 + d\_polycarboxylic$$
$$\text{acid}/0.00674 + d\_hydroxycarboxylic\ acid/0.00694 +$$
$$d\_lignosulfonate/0.0147$$

with

d_sugar = amount sugar in wt.-%, d_phosphate = amount phosphate in wt.-%, d_polycarboxylic acid = amount polycarboxylic acid and polycarboxylic acid salt in wt.-%, d_hydroxycarboxylic acid = amount hydroxycarboxylic acid and hydroxycarboxylic acid salt in wt.-%, d_lignosulfonate = amount lignosulfonate in wt.-%
all with respect to the weight of calcium silicates in the binder.

3. Use according to claim 1 or method according to claim 2, wherein the calcium silicate material comprises at least one calcium silicate, preferably at least one of $C_2S$, $C_2S_3$, and CS, and/or at least one calcium magnesium silicate, preferably $MC_7S_4$ and/or $MC_3S_2$.

4. Use according to claim 1 or 3 or method according to claim 2 or 3, wherein hydraulic phases, especially $C_3S$, are present in amount(s) $\leq 15$ wt.-% or $\leq 10$ wt.-% or $\leq 5$ wt.-% for each hydraulic phase, preferably for the sum of hydraulic phases.

5. Use according to any one of claims 1 or 3 or method according to claim 2 or 3, wherein Portland clinker is used as the binder or a part of the binder, or wherein the binder comprises amounts of $C_3S$ from 15 to 80 wt.-%.

6. Use according to any one of claims 1, 3 to 5 or method according to any one of claims 2 to 5, wherein the binder comprises at least 40 wt.-%, preferably at least 50 wt.-%, most preferred at least 60 wt.-%, carbonatable materials with respect to the total binder weight.

7. Use according to any one of claims 1, 3 to 6 or method according to any one of claims 2 to 6, wherein an average molar ratio of Ca/Si in the binder ranges from 0.5 to 2.5.

8. Use according to any one of claims 1, 3 to 7 or method according to any one of claims 2 to 7, wherein the accelerator comprises mixtures of at least two retarders from the group comprising sucrose, pyrophosphate, citric acid and/or citric acid salt, gluconic acid and/or gluconate, and lignosulfonate, preferably the accelerator is a mixture of sucrose and pyrophosphate.

9. Use according to any one of claims 1, 3 to 8 or method according to any one of claims 2 to 8, wherein the binder comprises sulfate, especially gypsum, hemihydrate, and/or anhydrite.

10. Use according to any one of claims 1, 3 to 9 or method according to any one of claims 2 to 9, wherein the binder is subjected to a carbonation atmosphere for hardening, wherein the carbonation atmosphere is gaseous with a concentration of $CO_2$ ranging from 1 Vol.-% or 5 Vol.-% to 100 Vol.-% or the carbonation atmosphere is liquid with concentrations of $CO_2$ ranging from 0.1 mM to 10 M.

11. Use or method according to claim 10, wherein the carbonation atmosphere has ambient temperature and/or pressure.

12. Use or method according to claim 10, wherein the gaseous carbonation atmosphere has a temperature of up to 300 °C or 150 °C or 100 °C or 70 °C and/or up to 1 bar or 2 bar or 5 bar overpressure.

13. Use or method according to claim 10, wherein the liquid carbonation atmosphere has a temperature of up to 99 °C or 95 °C or 90 °C or 80 °C and/or up to 1 bar or 2 bar or 5 bar overpressure.

14. Carbonation hardening binder comprising a calcium silicate material and at least two hydration retarders from the group comprising sugar, phosphate, polycarboxylic acid and/or salt, hydroxycarboxylic acid and/or salt, and lignosulfonate as accelerator with a dosage of the accelerator from 5 to 25 wherein the dosage is calculated as

$$dosage = d\_sugar/0.00138 - d\_phosphate/0.00382 + d\_polycarboxylic$$
$$acid/0.00674 + d\_hydroxycarboxylic\ acid/0.00694 +$$
$$d\_lignosulfonate/0.0147$$

with

d_sugar = amount sugar in wt.-%, d_phosphate = amount phosphate in wt.-%, d_polycarboxylic acid = amount polycarboxylic acid and polycarboxylic acid salt in wt.-%, d_hydroxycarboxylic acid = amount hydroxycarboxylic acid and hydroxycarboxylic acid salt in wt.-%, d_lignosulfonate = amount lignosulfonate in wt.-%
all with respect to the weight of calcium silicates in the binder.

15. Carbonation hardening binder according to claim 14, wherein the calcium silicate material comprises at least one calcium silicate, preferably at least one of $C_2S$, $C_2S_3$, $C_3S$, and CS, and/or at least one calcium magnesium silicate, preferably $MC_7S_4$ and/or $MC_3S_2$ and/or Portland clinker is used as the binder or a part of the binder and/or an average molar ratio of Ca/Si in the binder ranges from 0.5 to 2.5.

16. Carbonation hardening binder anyone of claims 14 or 15, wherein the binder comprises at least 40 wt.-%, preferably at least 50 wt.-%, most preferred at least 60 wt.-%, carbonatable materials with respect to the total binder weight.

17. Carbonation hardening binder anyone of claims 14 to 16, wherein the accelerator comprises mixtures of at least two retarders from the group comprising sucrose, pyrophosphate, citric acid and/or citric acid salt, gluconic acid and/or gluconate, and lignosulfonate, preferably the accelerator is a mixture of sucrose and pyrophosphate.

18. Carbonation hardening binder anyone of claims 14 to 17, wherein the binder comprises sulfate, especially gypsum, hemihydrate, and/or anhydrite.

| | Europäisches Patentamt European Patent Office Office européen des brevets | **EUROPEAN SEARCH REPORT** | **Application Number** EP 24 15 1036 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/054602 A1 (SOLIDIA TECHNOLOGIES INC [US]) 7 April 2016 (2016-04-07) * paragraphs [0026] - [0059] * ----- | 1-18 | INV. C04B28/02 C04B28/16 C04B40/02 |
| X | WO 2014/088915 A1 (SCHLUMBERGER SERVICES PETROL [FR] ET AL.) 12 June 2014 (2014-06-12) * paragraph [0024] * ----- | 14-18 | |
| A | WO 2019/072497 A1 (HEIDELBERGCEMENT AG [DE]) 18 April 2019 (2019-04-18) * the whole document * ----- | 1-18 | |

**TECHNICAL FIELDS SEARCHED (IPC)**

C04B

The present search report has been drawn up for all claims

| Place of search | Date of completion of the search | Examiner |
|---|---|---|
| Munich | 24 June 2024 | Gattinger, Irene |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 1036

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2024

| Patent document cited in search report | Publication date | Patent family member(s) | | Publication date |
|---|---|---|---|---|
| WO 2016054602 A1 | 07-04-2016 | EP | 3201156 A1 | 09-08-2017 |
| | | TW | 201619092 A | 01-06-2016 |
| | | US | 2016096773 A1 | 07-04-2016 |
| | | US | 2019135699 A1 | 09-05-2019 |
| | | WO | 2016054602 A1 | 07-04-2016 |
| WO 2014088915 A1 | 12-06-2014 | AR | 093719 A1 | 17-06-2015 |
| | | EP | 2749547 A1 | 02-07-2014 |
| | | US | 2015299555 A1 | 22-10-2015 |
| | | WO | 2014088915 A1 | 12-06-2014 |
| WO 2019072497 A1 | 18-04-2019 | CA | 3071952 A1 | 18-04-2019 |
| | | EP | 3466900 A1 | 10-04-2019 |
| | | ES | 2847198 T3 | 02-08-2021 |
| | | PL | 3466900 T3 | 31-05-2021 |
| | | US | 2020339476 A1 | 29-10-2020 |
| | | WO | 2019072497 A1 | 18-04-2019 |

EPO FORM P0459

For more details about this annex : see Official Journal of the European Patent Office, No. 12/82

**REFERENCES CITED IN THE DESCRIPTION**

**Patent documents cited in the description**

- US 20110165400 A1
- US 20120082839 A1
- US 20120312194 A1
- WO 2016022485 A1
- EP 3498681 A1
- EP 3581257 A1
- WO 2019072497 A1
- WO 2019072640 A1

**Non-patent literature cited in the description**

- **M. ZAJAC et al.** CO2 mineralization of Portland cement: towards understanding the mechanisms of enforced carbonation. *J. CO2 Utilization*, 2020, vol. 38, 398-415
- **M. ZAJAC et al.** *CO2 mineralization methods in cement and concrete industry*, https://doi.org/10.3390/en15103597